# EUROPEAN PATENT SPECIFICATION

(11) **EP 1 544 129 B1**
(45) Date of publication and mention of the grant of the patent: **05.05.2010**
(21) Application number: 04022757.1
(22) Date of filing: 24.09.2004
(51) Int. Cl.: B65D 81/02

(54) **Thermoformed plastic container and method for its manufacture**
Warmgeformter Kunststoffbehälter und Verfahren zu dessen Herstellung
Récipient thermoformé en matière plastique et méthodes pour sa fabrication

(30) Priority: 15.10.2003 EP 03023337
(43) Date of publication of application: 22.06.2005
(73) Proprietor: Cryovac, Inc., Duncan, SC 29334 (US)
(72) Inventor: Field, Morris John, Poole, BH12 2DN (GB); Long, Steve Mark, Broadstone, BH18 9ND (GB); Coates, Allen John, Parkstone, Poole, BH12 3AW (GB)
(74) Representative: De Carli, Elda

(56) References cited:
- FR-A- 2 715 373
- FR-A- 2 816 923
- US-A- 5 954 203
- US-B1- 6 443 309

## Description

The present invention relates to a thermoformed plastic container, useful for the packaging of soft products that might be easily bruised, and to the process for the manufacture thereof.

More particularly the present invention refers to a thermoformed plastic container for soft food and non food products, which container comprises a base portion and sidewalls extending upwardly from the periphery of the base portion, and is characterised in that said base portion is thermoformed in such a way that an array of hollow raised features with a flexible upper portion (also called here "soft caps"), project upwardly therefrom.

The container of the present invention will thus be characterised by a base or a part of it that is softened by the presence of these soft caps projecting towards the inner cavity of the container, and will therefore be particularly useful for the packaging of easily bruised products.

The packing of a number of products, particularly food products, such as produce or fruits, in particular red berries, require the use of containers with a separately applied form of protection, such as a protective pad of e.g. non woven material or air cushioning material such as Sealed Air's Bubble-Wrap®, glued to the base portion which is used to prevent the damage to the products by the rigid base of the container. The use of a separate protective pad presents however several drawbacks. It is in fact necessary to provide for an additional, separate and dedicated step, in the product packaging process or in the process for the manufacture of the container, to position the separate pad into the container. This will bring about an increase in the overall cost of the process that will add up to the increase due to the cost of the separate pad and of the glue used to keep the separate pad in place. Finally, the use of a separate protective pad might give problems of recycling in case the protective pad cannot be recycled together with the container or if the glue employed for binding the pad to the container cannot be recycled.

It has now been discovered that it is possible - by suitably modifying an otherwise conventional thermoforming process and machine - to create a softened area directly in the base portion of a container by a thermoforming process and thus obtain a one-piece container with a softened base that can suitably be employed for the packaging of easily bruised products without requiring the use of a separate insert, thus overcoming the drawbacks of the prior art.

A first object of the present invention is therefore a one-piece thermoformed plastic container with a base portion and sidewalls extending upwardly from the periphery of said base portion said container being characterised in that the base comprises an array of hollow raised features having an upper flexible portion projected upwardly from said base.

A second object of the present invention is a thermoforming process designed for the manufacture of the one-piece plastic container of the first object.

A third object of the present invention is a package of a soft product wherein the soft product is loaded into a container according to the first object of the present invention and the package is closed by lidding or wrapping the filled container.

In order that the present invention may more readily be understood the following description is given, merely by way of example, with reference to the accompanying drawings in which:
Figure 1 is a side view of a container according to the present invention;
Figure 2 is an enlarged view of a hollow raised feature encircled in Figure 1;
Figure 3 is a top view of the container of Figure 1;
Figures 4a, 4b, 4c, 4d, and 4e represent the sequence of steps in a thermoforming process leading to the container of the invention, wherein the thermoforming machine is always presented in a front sectional view;
Figures 5a and 5b represent the sequence of key steps in an alternative embodiment of the thermoforming process of the present invention, wherein the thermoforming device is presented in a front sectional view.

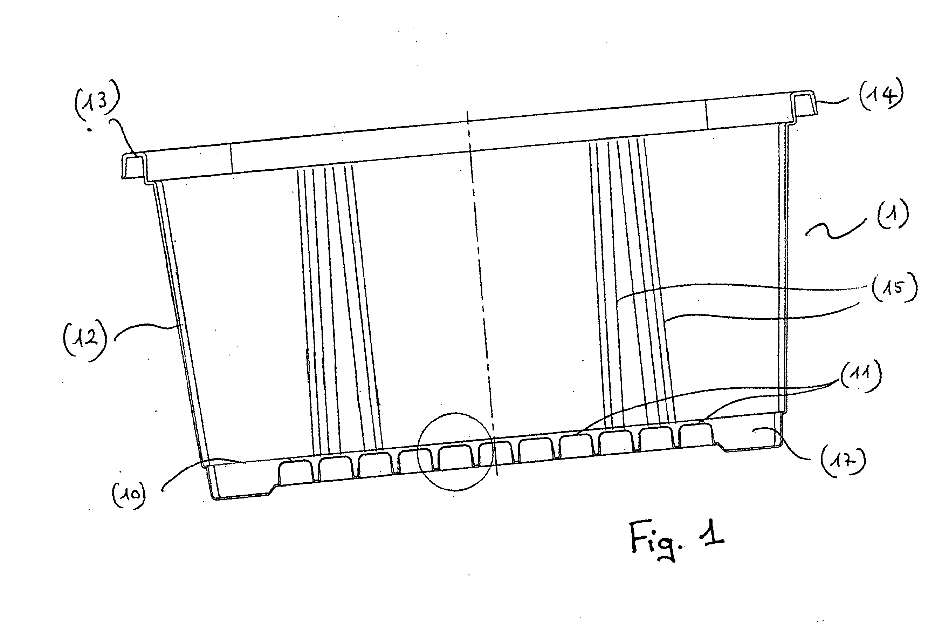

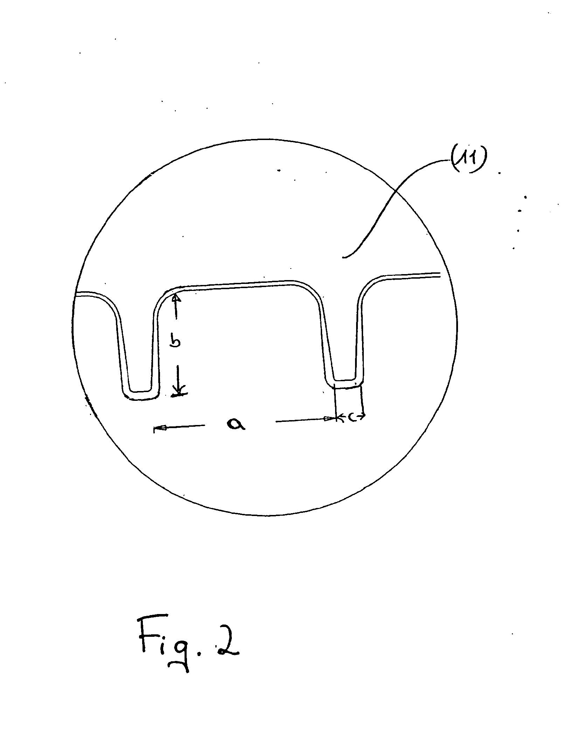

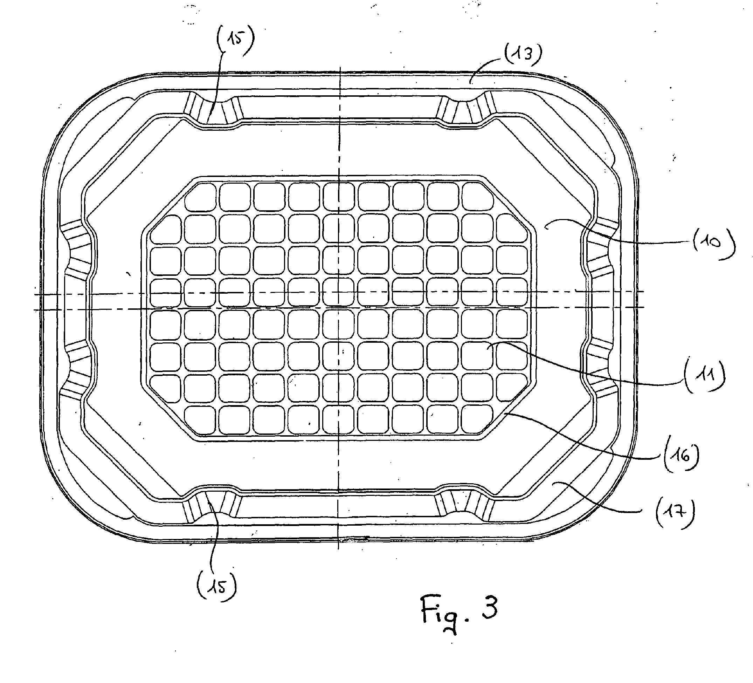

As illustrated in the embodiment of Figure 1 and Figure 3, the base (10) of the container (1) of the present invention comprises an array of hollow raised features (11) that are obtained by a thermoforming step. As clearly illustrated in the enlarged view of Figure 2, each hollow raised feature is characterised by a flexible upper portion which is obtained by the thinning of the plastic web, with respect to the plastic web of the base portion, due to the thermoforming stretching. In the thermoforming process in fact those parts that have been stretched the least are the thickest while those that have been stretched the most are the thinnest. Depending on the composition of the starting plastic web (number of layers, type of polymers in each layer, and thickness ratio of the various layers), in order to be flexible the upper portion of the raised features will have to be less than 100 µm, preferably less than 80 µm and more preferably less than 60 µm thick, such as 10, 15, 20, 25, 30, 35, 40, 45, 50, or 55 µm thick.

The width of the raised features, expressed as the diameter of the hemisphere or cylinder to which each of the hollow raised feature (11) can be approximated, and indicated in Figure 2 as "a", would be typically less than 20 mm, preferably less than 18 mm and more preferably less than 15 mm. In line of principle, the smaller the diameter of each raised feature the better the softening effect of the base but this has to be balanced with the requirements of the manufacturing process and the stiffness/stability requirements for the overall container. In fact, in order to get a flexible upper portion of a small nipple, it is necessary to start from a base web sufficiently thin, as otherwise the limited stretching would not produce the desired effect, and this may impair the stability of the container as the entire base might become flexible. Also, soft caps larger than 20 mm might compromise the stability of the container, depending on the composition of the web and mainly on the number and distribution of the soft caps on the base portion. A suitable width for the hollow raised features (11) would therefore be about 5, 6, 7, 8, 9, 10, 11, 12, 13, 14, or 15 mm, with the central range, i.e. 7, 8, 9, 10, 11, 12, being preferred.

The height of the hollow raised features (the distance of the top of the hollow raised feature from the plane of the base, indicated in Figure 2 as "b") would typically be from one fifth of their width to a value about equal to their width. Preferably their height would be at least one fourth of their width and even more preferably at least one third up to a value that is slightly less than their width. Thus, for soft caps with e.g. a width of about 10 mm, a preferred height would be from about 3 to about 9 mm.

The raised hollow features (11) are preferably in evenly spaced relation. The distance between two adjacent features would be large enough to maintain the desired rigidity to the base and the container but not too large to disrupt the softening effect. Typically the distance between two adjacent raised features (indicated in Figure 2 as "c") would be from at least about 1 mm to about 10 mm, preferably from about 1 mm to about 8 mm, more preferably from about 2 mm to about 6 mm.

While not necessarily disposed in a symmetrical fashion, preferably the hollow raised features (11) will be distributed in parallel rows, as illustrated in Figure 3, or in offset rows (not shown) or in concentric rings (also not shown) or in spiral form (also not shown) or in any other substantially regular pattern. Not necessarily however they need to cover the whole surface of the base portion. Typically the array of hollow raised features (11) will be positioned in the central portion of the base as illustrated for instance in Figure 3 and will cover at least 50 %, preferably at least 60 %, more preferably at least 70 %, and even more preferably at least 80 % of the surface of the base portion.

In the Figures the hollow raised features (11) are represented as cylinders or hemispheres ("bubbles"). However they may also have a different shape. For instance they may be V-shaped or rod-shaped caps arranged alternatively in several rows such that caps in adjacent rows oppose each other. The above description concerning size and distribution of soft caps having a cylinder or hemisphere shape can be applied analogously also to soft caps of a different shape.

While hollow raised features (11) of essentially the same size are preferred, particularly because this will simplify the manufacturing process, this however is not a strict requirement to get the desired softening effect as for instance alternating smaller and larger soft caps, or alternating soft caps of different shape, may further improve the protecting effect.

Sidewalls (12) will project upwardly from the periphery of the base ending up into a top flange (13) that is the upper periphery of the container and extends around its open top in a continuous unbroken manner. Said flange is typically planar and parallel to the plane of the base. Its width is not critical. If the container has to be closed by heat-sealing a lidding film or sheet onto the flange, then the flange should be at least 3-4 mm wide. Otherwise, if the container has to be closed by wrapping up, or by snapping on a mating rigid lid or cover as known in the art, the flange may be smaller than that or even a mere bead. As illustrated in Figure 1, the flange may have a skirt (14).

Preferably in the container of the present invention the sidewalls (12) are substantially upright as in Figure 1, to give the container the shape of a punnet, but alternatively they may also project outwardly to give the container the shape of a conventional tray.

A plurality of ribs (15) is generally present in the sidewalls (12) to provide for the desired vertical stiffness.

Corrugations lines that may be parallel flutes, furrows, ridges, crests or grooves (16) may be formed also in the base portion, in the part thereof that does not comprise the raised features (11).

In one embodiment, illustrated in Figure 1 and Figure 3, the container is also provided with a downwardly projecting element (17), that may be in the form of a continuous annular element extending over the whole perimetric portion of the base (10), at a slightly retracted position relative to the edge where the base (10) connects with the sidewalls (12), or it may be in the form of discrete projecting elements typically at the corners of the base (10), with a flat bottom external surface to serve as support for the container.

In one embodiment of the present invention that is not illustrated here, a rigid covering lid may be included and unitarily formed with the container. In such an embodiment the lid and the container are a single continuous piece of material formed simultaneously with a hinge, formed integrally therewith, which on deformation allows the covering lid to swing backwards and forwards on opening and closing the receptacle.

The polymeric materials that can be used in the manufacture of the container of the present invention can include any polymers that fulfill the purposes of the invention or which, with the addition of additives can be modified to fulfill the purposes of the invention. Polymers suitable include polyolefins, such as polypropylenes and polyethylenes, polyvinyl chloride, polyesters, co-polyesters, polyamides, co-polyamides, polystyrene, polystyrene copolymers, and the like polymers. It is also possible to use blends of suitable polymers, particularly when one of the components of the blend is used in a minor amount as an impact modifier to increase flexural modulus and crack resistance.

For produce and fruit packaging the container is typically highly permeable and often it is also perforated to allow the exchange of gases with the environment. In such a case, the presence of discrete projecting elements (17) will be particularly preferred because by suitably selecting a gas permeable material for the container and/or suitably creating small perforations therein, the exchange of gases with the environment will be possible also for the items packaged in contact with the bottom of the container.

In certain cases however it is preferable to use multilayer polymeric structures with gas-barrier properties. Gas-barrier properties may be required e.g. to maintain a suitably modified or controlled atmosphere within the package that would prolong the shelf life of the packaged food product. In such a case the material used for the container will comprise a gas-barrier layer, typically comprising ethylenevinyl alcohol copolymers, nylons, or blends thereof, set in order to provide the materials with an Oxygen Transmission Rate (OTR) (evaluated by following the method described in ASTM D-3985 and using an OX-TRAN instrument by Mocon) lower than 250, preferably lower than 125 cm³/m².d.atm, when measured at 23 °C and 0 % of relative humidity. Generally in such a case the multi-layer structure will also comprise a heat-sealable resin such as a polyethylene resin, as the innermost layer (i.e. the skin or external layer of the container which is closer to the food product), to improve the sealability properties of the container, and a bulk layer of a polymer or polymer blend such as those indicated above. This may be required when e.g. the closure is provided by means of a lid heat-sealed to the container flange and a hermetic seal is required (such as in MAP or vacuum packages).

The thermoplastic material used for the container of the present invention may be transparent, either clear or colored, translucent, either clear or colored, or opaque.

The sheet used for the manufacture of the container of the invention may be obtained by extrusion, and in case of a multilayer sheet by co-extrusion, or by conventional lamination techniques and is then converted into container (1) by a two-step thermoforming process. In the first step a container with a substantially flat base portion is formed and in the second the array of hollow raised features is created in said substantially flat base portion.

These two forming steps can be carried out, one immediately after the other, in the same, suitably designed, thermoforming machine or they can be carried out separately using a conventional thermoforming machine for the first step and a suitably designed forming device for the second one.

In the former case, the conversion of the sheet into a container according to the present invention is carried out by a first step of negative thermoforming using a concave, female mould having an essentially flat base, where the heat-softened plastic is drawn down over the mould by drawing a vacuum through the mould, optionally with the assistance of a suitable plug, followed by a second step of inverted negative thermoforming, where the array of hollow raised features with a flexible upper portion is created into the base of the container by blowing air from the base of the concave mould against a suitably shaped positive plug mould that compresses the formed sheet against the base of the concave mould and/or by suitably applying a negative pressure through said shaped positive plug mould.

In this embodiment of the process the sidewalls, the base corner and top flange areas of the female mould are cooled during the entire process by chilled water circulating within the metal body of the mould. The central base area of the mould however is never cooled during the entire thermoforming process. This central portion of the female mould base may on the other hand also be heated, e.g. by electrical element heaters or circulating hot fluids (water, oil, etc.). During the first thermoforming step the central shaped portion of the plug assist is held inside the main body of the plug until the second, re-forming, step takes place. Said central shaped portion is lowered towards the female mould in said second step of inverted negative thermoforming to allow the subsequent re-forming of the base area of the mould-shaped plastic to create the desired array of raised features therein. Said separate shaped portion of the plug assist is cooled by circulating chilled water and once this second thermoforming step is completed, and the soft caps are blown and/or sucked against the surface of the shaped central portion of the plug assist, this allows a rapid temperature drop. With the reduced temperature the shaped plastic container becomes stable and can suitably be removed from the mould without being distorted.

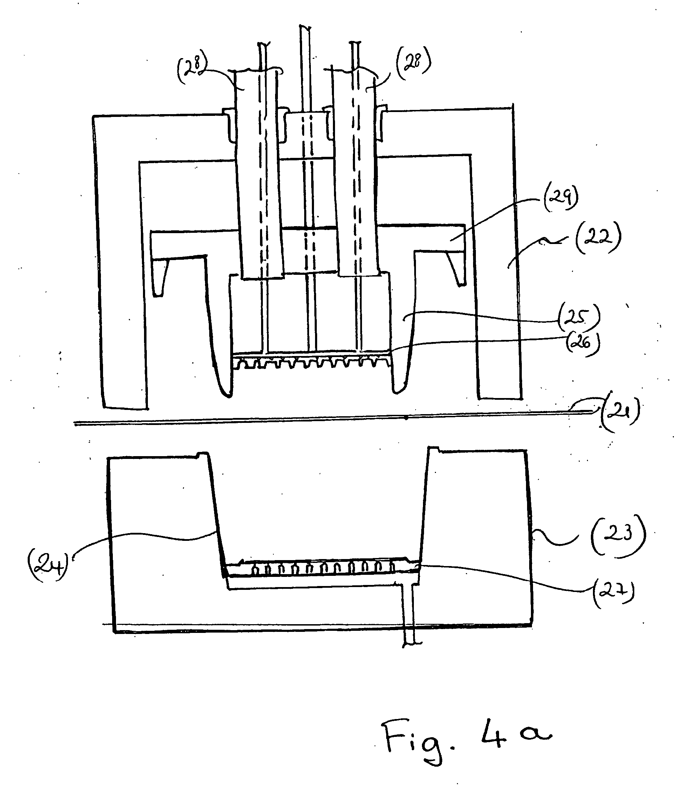

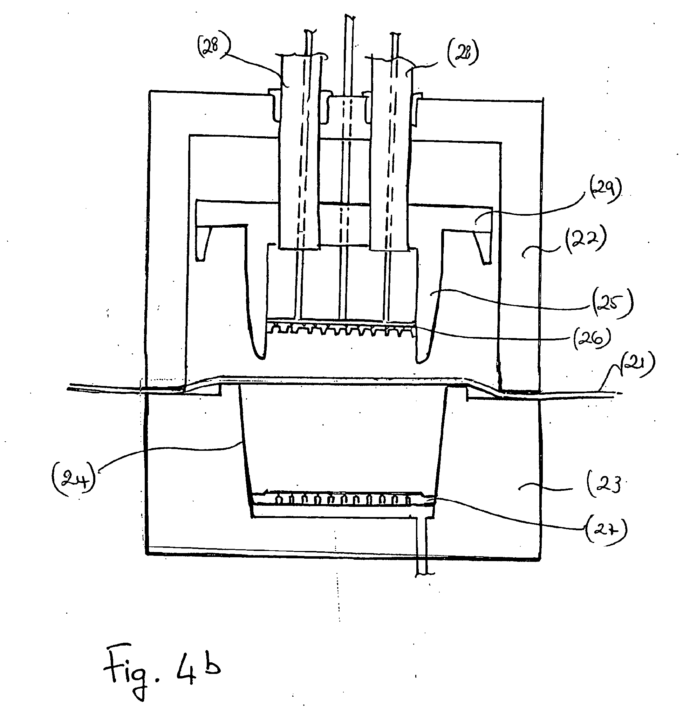

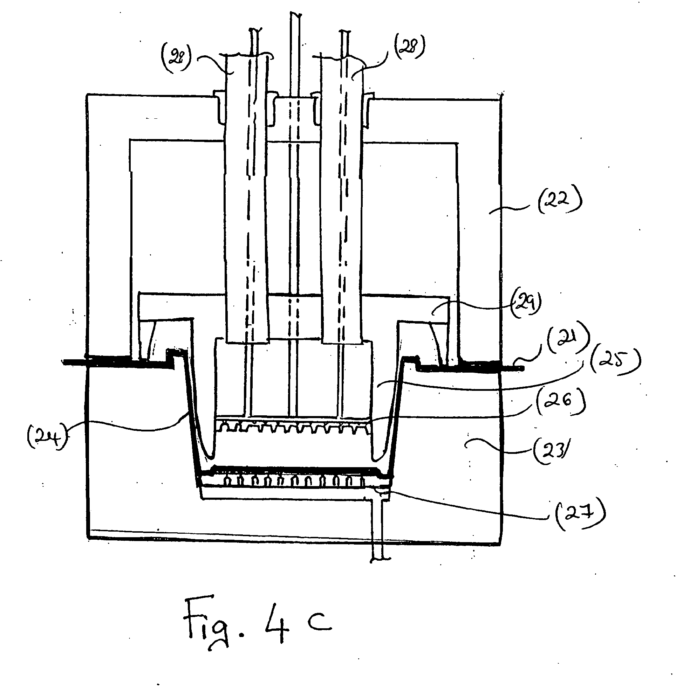

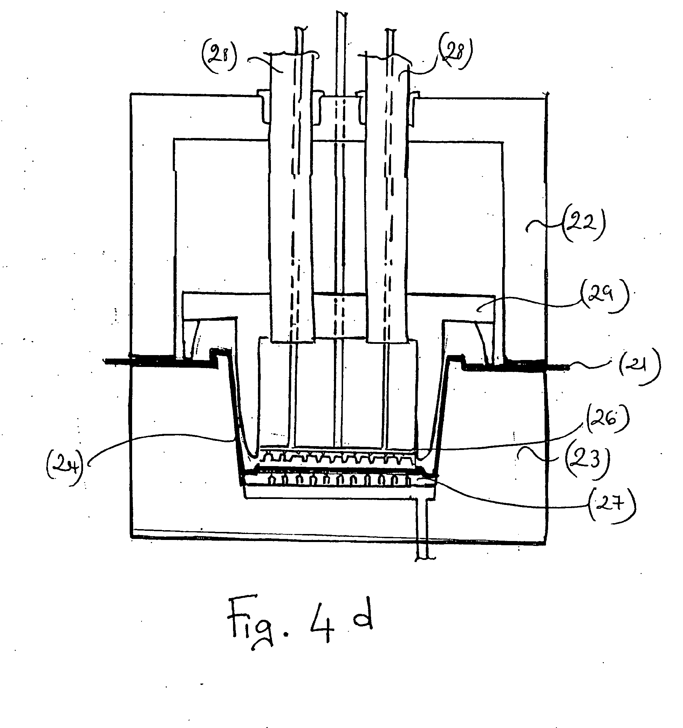

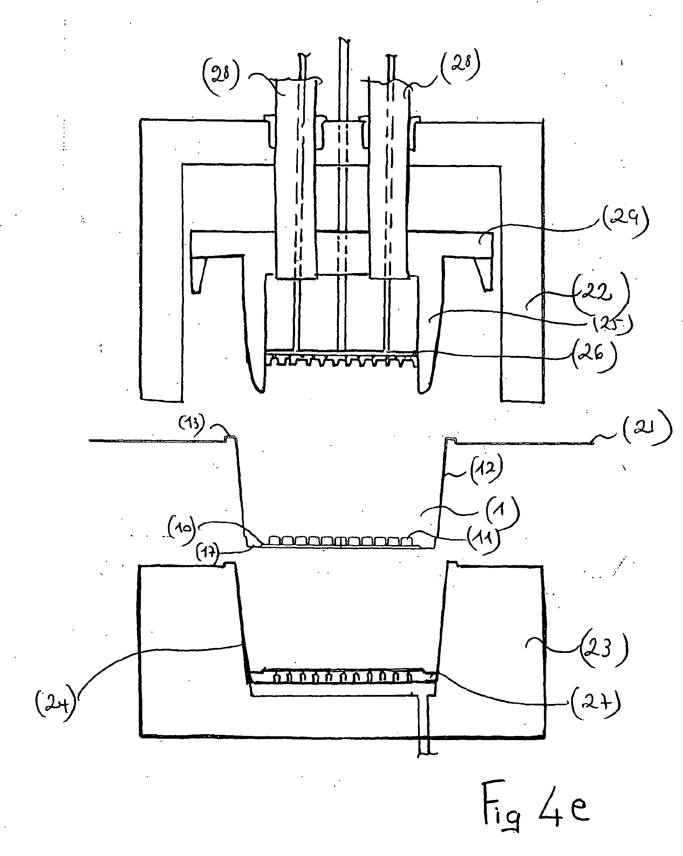

With reference to Figures 4a to 4e, better illustrating this embodiment of the thermoforming process of the present invention, (21) represents the heated and softened thermoformable sheet which is fed between the two halves of the tool, the upper one, pressure box (22), and the lower one, mould (23). In Figure 4a the two halves are separated. In Figure 4b the tool closes sealing sheet (21) against the top of the lower mould (23) and the open end of the pressure box (22). Plug (25) then moves towards the cavity (24) of the mould (23) until it has completed its travel and is stopped by the plug stopping plate (29) and at the same time a positive pressure is applied to pressure box (22) through the plug pillars (28) and the plug "soft caps" mould plate (26) while a negative pressure (vacuum) is applied to cavity (24) via the cavity vented plate (27), pushing sheet (21) against said plate (27) (Figure 4c). In Figure 4d, the plug "soft caps" mould plate (26) has moved further down to face the formed sheet (21) in contact with the cavity vented plate (27). At the same time the positive pressure that was applied through the plug "soft caps" mould (26) is switched to a negative pressure and the negative pressure applied through the cavity vented plate (27) is switched to a positive air pressure to create the array of hollow raised features (11) mating the shape of the plug "soft caps" mould plate (26). During the entire thermoforming cycle, the sidewalls, base corner and top flange areas of the mould (23), but not the central base portion, are cooled by chilled circulating water. Also cooled by circulating cold water is the plug "soft caps" mould plate (26). Once also the second thermoforming step is complete, and a time sufficient to ensure cooling of the thermoformed sheet in the mould is past, the positive and negative pressures are vented to atmosphere, the plug (25) with the plug "soft caps" mould plate (26) is retracted, and the mould is opened (Figure 4e).

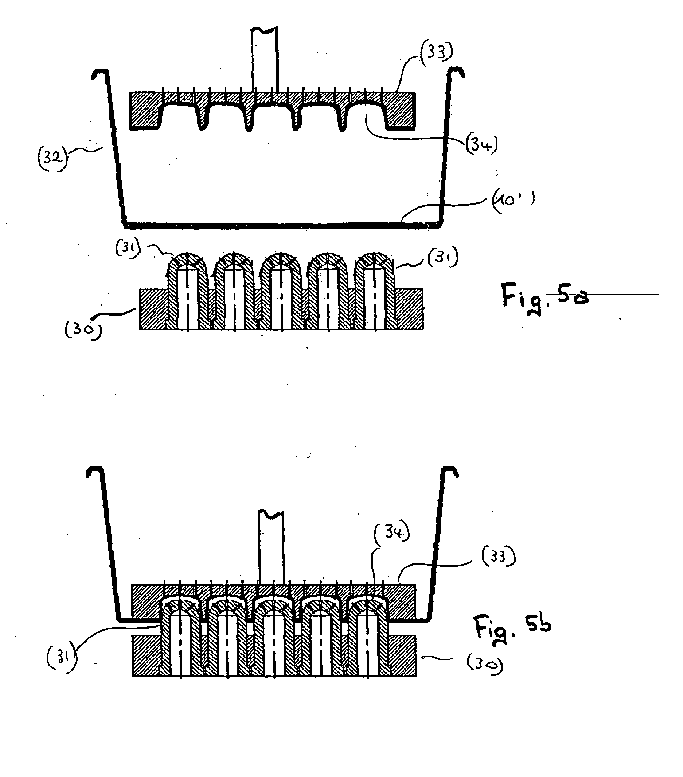

In an alternative embodiment of the process of the present invention, a container with a substantially flat base portion is manufactured by a conventional thermoforming process and then submitted to a secondary forming step using a suitably designed forming device to create the array of hollow raised features (11). In said secondary forming step, as illustrated in Fig. 5a and 5b, a heated plate (30) with raised pins (31) is mechanically driven into the flat base portion (10') of the preformed container (32). A counter impression recessed cooled plate (33) acts on the opposite side of the base portion of the container. The introduction of the heated pins (31) softens the areas of the container base portion in contact therewith. When the material is in plastic condition, positive air pressure is supplied through the pins (31) forcing the softened material into the counter impression plate (33). The recesses (34) in this plate can be vented to atmosphere or have a vacuum applied to remove the air blown through the pins (31).

The heated pins (31) are smaller in size (diameter) than the recesses (34). The heated pins (31) should soften the base portion sufficiently to enable air to blow the plastic material off the pins (31) and into the recesses (34). The shape of the recesses (34) and their size is what defines the final shape of the raised hollow features (11), while the heated pins (31) only pre-stretch the material into the approximate shape.

After sufficient cooling time the two plates (30) and (33) are withdrawn leaving an array of permanently formed raised hollow features (11) in the base portion (10) of the container (1).

Size and distribution of the hollow raised features (31) are as described above.

In the thermoforming process of the present invention typically at least the first forming step is carried out on a webstock of material, even if in line of principle separated cut sheets could also be employed. At the end of the process or also before the second forming step, in case of separate steps, suitably designed cutting means separate the containers, one from the other, if prepared from a webstock, and trim out the excess plastic material.

The thickness of sheet (21), used as starting material in the above described thermoforming process, would be generally within the range of from about 150 µm to about 1,000 µm, preferably from about 160 µm to about 900 µm, even more preferably from about 170 µm to about 800 µm, most preferably from about 180 µm to about 700 µm, mainly depending on the height desired for the tray and therefore on the depth of the first thermoforming step.

Thermoplastic materials suitable for the manufacture of the wrapping or lidding sheet or film, if any, include mono- and multi-layer films, oriented or non oriented, and, if oriented, heat-shrinkable or heat-set. Monolayer structures will typically comprise polyolefins (such as propylene-based polymers or, preferably cross-linked, polyethylene-based polymers) or polyesters. Multi-layer structures will comprise at least an outer sealing layer, generally an outer heat-sealing layer, and an outer abuse layer. These multi-layer structure may include additional inner layers, such as gas-barrier layers, if a gas-barrier package is desired, bulk layers, and tie layers, as known in the art.

Suitably mating rigid lids will generally be made by thermoforming, using the same plastic material of the container. Alternatively cardboard may also be employed.

## Claims

1. A one-piece open-top thermoformed plastic container (1) with a base portion (10) and sidewalls (12) extending upwardly from the periphery of said base portion said container being **characterized in that** the base comprises an array of hollow raised features (11) having an upper flexible portion projected upwardly from said base.

2. The container of claim 1 wherein the flexible upper portion of the hollow raised features (11), obtained by the thinning of the plastic web, with respect to the base portion, due to the thermoforming stretching, has a thickness less than 100 µm, preferably less than 80 µm and more preferably less than 60 µm thick, such as 10, 15, 20, 25, 30, 35, 40, 45, 50 or 55 µm thick.

3. The container of claim 1 wherein the hollow raised features (11) are shaped as small cylinders or hemispheres ("bubbles").

4. The container of claim 3 wherein the width of the hollow raised features (11), expressed as the diameter of the hemisphere or cylinder, is about 5, 6, 7, 8, 9, 10, 11, 12, 13, 14, or 15 mm, and their height, as the distance of the top of the raised feature from the plane of the base, is from one fifth of their width to a value about equal to their width.

5. The container of claim 1 wherein the hollow raised features (11) are in evenly spaced relation with a distance between two adjacent raised features of from at least about 1 mm to about 10 mm, preferably from at least about 1 mm to about 8 mm, more preferably from about 2 mm to about 6 mm.

6. The container of any of the preceding claims wherein the array of hollow raised features (11) is positioned in the central portion of the base (10) and covers at least 50 %, preferably at least 60 %, more preferably at least 70 %, and even more preferably at least 80 % of the surface of the base portion.

7. The container of any of the preceding claims which is made of a polymer selected from polypropylenes, polyethylenes, polyvinyl chloride, polyesters, copolyesters, polyamides, co-polyamides, polystyrene, and polystyrene copolymers.

8. The container of any of the preceding claims which is perforated to allow the exchange of gases between the container and the environment.

9. A process for the manufacture of a container of claim 1 by a two step thermoforming process comprising a first step of forming a container with a substantially flat base portion and a second step of forming an array of hollow raised features therein.

10. The process of claim 9 wherein said second step of forming an array of hollow raised features in the substantially flat base portion of the container is accomplished by either blowing air from beneath the softened substantially flat base portion against a suitably shaped positive plug mould and/or applying a negative pressure through said shaped positive mould, or driving a plate of heated pins into the substantially flat base portion and forcing the thus softened material of said base portion into a suitably shaped positive mould by blowing air through said pins.

11. A package of a soft product wherein the soft product is loaded into a container according to any of preceding claims 1 to 8 and the package is closed by lidding or wrapping the filled container.

## Patentansprüche

1. Einstückiger, oben offener, warmgeformter Kunststoffbehälter (1) mit einem Bodenbereich (10) und vom Rand des Bodenbereichs nach oben verlaufenden Seitenwänden (12), wobei der Behälter **dadurch gekennzeichnet ist, dass** der Boden eine Anordnung von hohlen Erhebungen (11) mit einem oberen flexiblen Bereich aufweist, der vom Boden nach oben vorsteht.

2. Behälter nach Anspruch 1, wobei der flexible obere Bereich der hohlen Erhebungen, der durch eine Verdünnung der Kunststoffbahn relativ zu dem den Bodenbereich aufgrund der Dehnung beim Warmformen erzeugt worden ist, eine Dicke von weniger als 100 µm, vorzugsweise von weniger als 80 µm und am meisten bevorzugt von weniger als 60 µm hat, wie etwa eine Dicke von 10, 15, 20, 25, 30, 35, 40, 45, 50 oder 55 µm.

3. Behälter nach Anspruch 1, wobei die hohlen Erhebungen (11) als kleine Zylinder oder Halbkugeln ("Blasen") geformt sind.

4. Behälter nach Anspruch 3, wobei die Breite der hohlen Erhebungen (11), ausgedrückt als der Durchmesser der Halbkugel oder des Zylinders, etwa 5, 6, 7, 8, 9, 10, 11, 12, 13, 14 oder 15 mm beträgt und die Höhe, ausgedrückt als Abstand zwischen der Spitze der Erhebung von der Bodenebene, von etwa einem Fünftel ihrer Breite bis zu einem Wert gleich ihrer Breite ist.

5. Behälter nach Anspruch 1, wobei die hohlen Erhebungen (11) eine gleichmäßige Abstandsbeziehung haben, wobei ein Abstand zwischen zwei benachbarten Erhebungen im Bereich von wenigstens etwa 1 mm bis etwa 10 mm liegt, vorzugsweise von wenigstens etwa 1 mm bis etwa 8 mm, und noch mehr bevorzugt von etwa 2 mm bis etwa 6 mm.

6. Behälter nach einem der vorhergehenden Ansprüche, wobei die Anordnung von hohlen Erhebungen (11) im zentralen Bereich des Bodens (10) angeordnet ist und wenigstens 50%, vorzugsweise wenigstens 60%, noch mehr bevorzugt wenigstens 70% und am meisten bevorzugt wenigstens 80% der Oberfläche des Bodenbereichs abdeckt.

7. Behälter nach einem der vorhergehenden Ansprüche, der aus einem Polymer hergestellt ist, das ausgewählt ist aus Polypropylenen, Polyethylenen, Polyvinylchlorid, Polyestern, Copolyestern, Polyamiden, Copolyamiden, Polystyrolen und Polystyrolcopolymeren.

8. Behälter nach einem der vorhergehenden Ansprüche, der mit Löchern versehen ist, um den Austausch von Gasen zwischen dem Behälter und der Umgebung zu erlauben.

9. Verfahren zur Herstellung eines Behälters nach Anspruch 1 durch einen zweistufigen Warmformprozess, der einen ersten Schritt des Formens eines Behälters mit einem im Wesentlichen flachen Bodenbereich und einen zweiten Schritt des Formens einer Anordnung von hohlen Erhebungen darin umfasst.

10. Verfahren nach Anspruch 9, wobei der zweite Schritt des Formens einer Anordnung von hohlen Erhebungen in dem im Wesentlichen flachen Bodenbereich des Behälters durchgeführt wird, indem entweder Luft von unten gegen den erweichten, im Wesentlichen flachen Bodenbereich gegen ein geeignet geformtes Positiv-Werkzeug geblasen wird und/oder durch das geformte Positiv-Werkzeug hindurch ein Unterdruck erzeugt wird oder indem eine Platte mit erwärmten Stiften in den im Wesentlichen flachen Bodenbereich gedrückt wird und das dadurch erweichte Material des Bodenbereichs in ein geeignet geformtes Positiv-Werkzeug durch Blasen von Luft durch die Stifte gedrückt wird.

11. Verpackung für ein weiches Produkt, wobei das weiche Produkt in einen Behälter nach einem der vorhergehenden Ansprüche 1 bis 8 gefüllt ist und die Verpackung verschlossen ist, indem der gefüllte Behälter mit einem Deckel versehen oder eingehüllt ist.

## Revendications

1. Contenant plastique thermoformé en une pièce, à dessus ouvert (1), avec une portion de base (10) et des parois latérales (12) s'étendant vers le haut depuis la périphérie de ladite portion de base, ledit contenant étant **caractérisé en ce que** la base comprend une rangée de caractéristiques creuses relevées (11) ayant une portion flexible supérieure faisant saillie vers le haut depuis ladite base.

2. Contenant selon la revendication 1, dans lequel la portion supérieure flexible des caractéristiques relevées creuses (11), obtenue par l'amincissement de la bande plastique, par rapport à la portion de base, dû à l'étirage sous thermoformage, possède une épaisseur inférieure à 100µm, de préférence inférieure à 80µm et selon la plus grande préférence une épaisseur inférieure à 60µm, comme une épaisseur de 10, 15, 20, 25, 30, 35, 40, 45, 50 ou 55µm.

3. Contenant selon la revendication 1, dans lequel les caractéristiques relevées creuses (11) sont réalisées comme de petits cylindres ou hémisphères ("bulles").

4. Contenant selon la revendication 3, dans lequel la largeur des caractéristiques relevées creuses (11), exprimée comme diamètre de l'hémisphère ou du cylindre, est d'environ 5, 6, 7, 8, 9, 10, 11, 12, 13, 14 ou 15 mm, et leur hauteur, la distance du dessus de la caractéristique relevée depuis le plan de la base, représente un cinquième de leur largeur à une valeur environ égale à leur largeur.

5. Contenant selon la revendication 1, dans lequel les caractéristiques relevées creuses (11) se trouvent dans une relation uniformément espacée avec une distance entre deux caractéristiques relevées adjacentes d'au moins environ 1 mm à environ 10 mm, de préférence d'au moins environ 1 mm à environ 8 mm, selon une plus grande préférence d'environ 2 mm à environ 6 mm.

6. Contenant selon l'une quelconque des revendications précédentes, dans lequel la rangée de caractéristiques relevées creuses (11) est positionnée dans la portion centrale de la base (10) et couvre au moins 50%, de préférence au moins 60%, selon une plus grande préférence au moins 70% et selon une préférence encore plus grande au moins 80% de la surface de la portion de base.

7. Contenant selon l'une quelconque des revendications précédentes, qui est réalisé en un polymère sélectionné parmi des polypropylènes, polyéthylènes, polyvinylchlorure, polyesters, copolyesters, polyamides, copolyamides, polystyrène et copolymères de polystyrène.

8. Contenant selon l'une quelconque des revendications précédentes, qui est perforé pour permettre l'échange de gaz entre le contenant et l'environnement.

9. Procédé de fabrication d'un contenant selon la revendication 1, par un processus de thermoformage en deux étapes, comprenant une première étape consistant à former un contenant avec une portion de base sensiblement plate et une deuxième étape consistant à former une rangée de caractéristiques relevées creuses dans celle-ci.

10. Procédé selon la revendication 9, dans lequel ladite deuxième étape consistant à former une rangée de caractéristiques relevées creuses dans la portion de base sensiblement plate du contenant est accomplie soit en soufflant de l'air depuis en dessous de la portion de base ramollie sensiblement plate contre un moule bouchon positif configuré d'une manière appropriée et/ou en appliquant une pression négative à travers ledit moule positif configuré, ou en entraînant une plaque d'axes chauffés dans la portion de base sensiblement plate et en forçant le matériau ainsi ramolli de ladite portion de base dans un moule positif configuré d'une manière appropriée en soufflant l'air à travers lesdits axes.

11. Emballage d'un produit mou, où le produit mou est chargé dans un contenant selon l'une quelconque des revendications 1 à 8, et l'emballage est fermé en appliquant un couvercle ou en enveloppant le contenant rempli.
